# EUROPEAN PATENT SPECIFICATION

(11) **EP 1 946 435 B1**
(45) Date of publication and mention of the grant of the patent: **20.01.2010**
(21) Application number: 06779270.5
(22) Date of filing: 04.09.2006
(51) Int. Cl.: H02P 6/14

(54) **ELECTRONIC COMMUTATOR CIRCUITS**
ELEKTRONISCHE KOMMUTATORSCHALTUNGEN
CIRCUITS DE COMMUTATEUR ELECTRONIQUE

(30) Priority: 18.10.2005 GB 0521099
(43) Date of publication of application: 23.07.2008
(73) Proprietor: Converteam Ltd, Rugby Warwickshire CV21 1BU (GB)
(72) Inventor: CRANE, Allan, David, Warwickshire CV23 0BH (GB)
(74) Representative: Thacker, Darran Ainsley
(86) International application number: PCT/GB2006/003249
(87) International publication number: WO 2007/045813

(56) References cited:
- EP-A1- 0 923 850
- GB-A- 2 117 580
- JP-A- 4 349 395
- JP-A- 11 150 957
- JP-A- 2002 142 489
- US-A- 3 942 094
- US-A- 4 209 683

## Description

### Technical Field

The present invention relates to electronic commutator circuits, and in particular to circuits for rotating and linear machines (such as brushless dc rotating and linear machines, for example) that employ forced electronic commutation.

### Background Art

A dc rotating machine typically includes a rotor surrounded by a wound stator. An electronic switching circuit is used to control the commutation of current in the stator winding based on the angular position of the rotor. The rotor provides a rotating magnetic field and this can be generated by permanent magnets, conventional windings with a slip ring or brushless excitation power supply, or superconducting windings with a suitable excitation power supply.

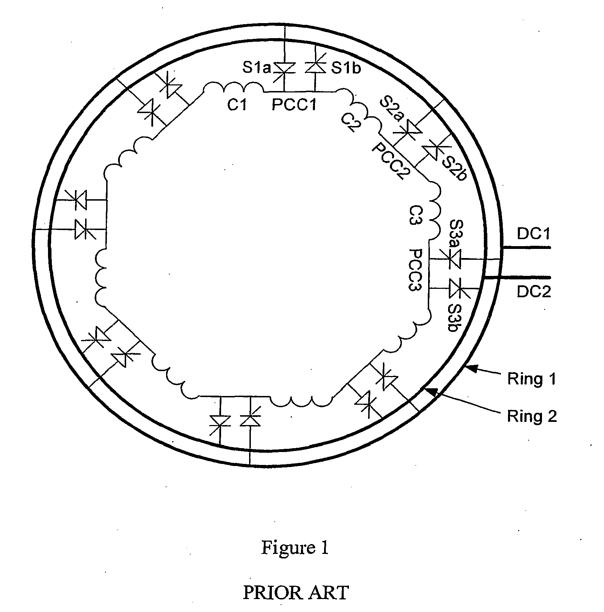

British Patent Application 2117580 discloses a brushless dc rotating machine that employs an electronic switching circuit. The electronic switching circuit essentially replicates a conventional brush and commutator topology for an industry-standard lap wound stator where the brushes are replaced by thyristors and the commutator segments are replaced by a point of common coupling between associated pairs of thyristors. One thyristor in each thyristor pair has its anode connected to a first dc terminal, while the other thyristor in that pair has its cathode connected to a second dc terminal. A stator winding with n series connected coils has n nodes that intercept the n points of common coupling in the electronic switching circuit. This is illustrated in Figure 1 for the case where n = 8.

It can be seen from Figure 1 that a first coil C1 is connected to a second coil C2 and to a first pair of thyristor switches S1a and S1b by means of a first point of common coupling PCC1. The anode of thyristor S1a is connected to a first dc terminal DC1 by means of a first ring "Ring 1" and the cathode of thyristor S1b is connected to a second dc terminal DC2 by means of a second ring "Ring 2". The second coil C2 is connected to a third winding C3 and to a second pair of thyristor switches S2a and S2b by a second point of common coupling PCC2. The anode of thyristor S2a is connected to the first dc terminal DC1 by means of the first ring "Ring 1" and the cathode of thyristor S2b is connected to the second dc terminal DC2 by means of the second ring "Ring 2". The remaining coils are connected to the first dc terminal DC1 and the second dc terminal DC2 in a corresponding manner.

The thyristor pairs are commutated by the back emf (i.e. the electromotive force induced in the stator windings) of the brushless dc rotating machine and by the application of gate pulses that are synchronised with the angular position of the rotor. At low rotor speeds this back emf can be insufficient for the commutation of the thyristors and an external commutation circuit of the dc line type is employed. This external commutation circuit is also synchronised to the angular position of the rotor and hence to the gating of the thyristor pairs.

The brushless dc rotating machine of British Patent Application 2117580 suffers from the following disadvantages:
(i) the synchronisation of the gating of the thyristor pairs to the angular position of the rotor is difficult to implement and is prone to electromagnetic interference; and
(ii) the gating synchronisation of the thyristor pairs and the subsequent commutation process is not capable of precisely adapting to the load conditions of the machine.

It will be readily understood that it is possible to derive a general linear machine equivalent of the brushless dc rotating machine described in British Patent Application 2117580. This brushless dc rotating machine is depicted in Figure 1 as having a pair of ring-type dc terminals and a circular array of switching stages but these can be represented in a linear form for ease of clarity.

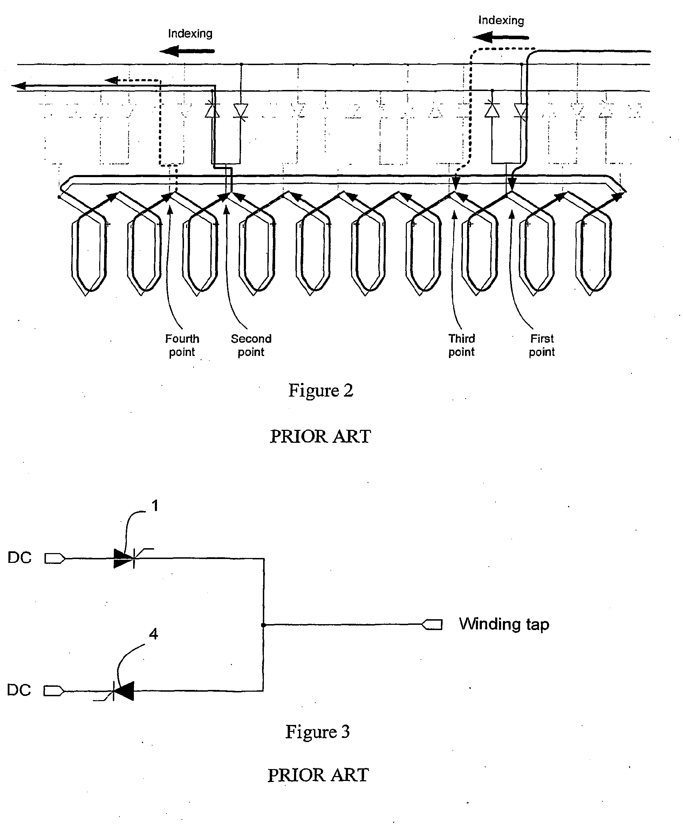

The linear form of a basic stator winding (polygonal winding or lap winding) and electronic commutator circuit is shown in Figure 2. The electronic commutator circuit consists of a number of identical switching stages disposed in a linear rather than a circular array. Each switching stage includes a pair of thyristors 1 and 4 as shown in Figure 3. During operation of a dc electrical machine in a generating mode, for the majority of the time, dc current flows into the stator winding at a first point in the array and flows out of the stator winding at a second point in the array. The second point is displaced approximately 180 electrical degrees from the first point. The winding current diverges into two approximately equal paths at the first point and recombines at the second point, as shown in Figure 2. In order to effect commutation, the location of the first point or the second point must be indexed one step along the array. The indexing may occur simultaneously, from the first point to a third point and from the second point to a fourth point, or the indexing may be sequential, with initial indexing from the first point to the third point followed by indexing from the second point to the fourth point. According to well-known natural commutation terminology, a switching device that carries current after the commutation is known as an incoming device and the device that carries current before the commutation is known as an outgoing device. The condition of these two devices is subject to overlap and reverse recovery, and phase control may be employed. In this case, the indexing is caused by the application of a gate pulse to the incoming device at a time when its terminals are forward biased (anode positive with respect to the cathode) and in so doing causing the power terminals of the outgoing device to be reverse biased.

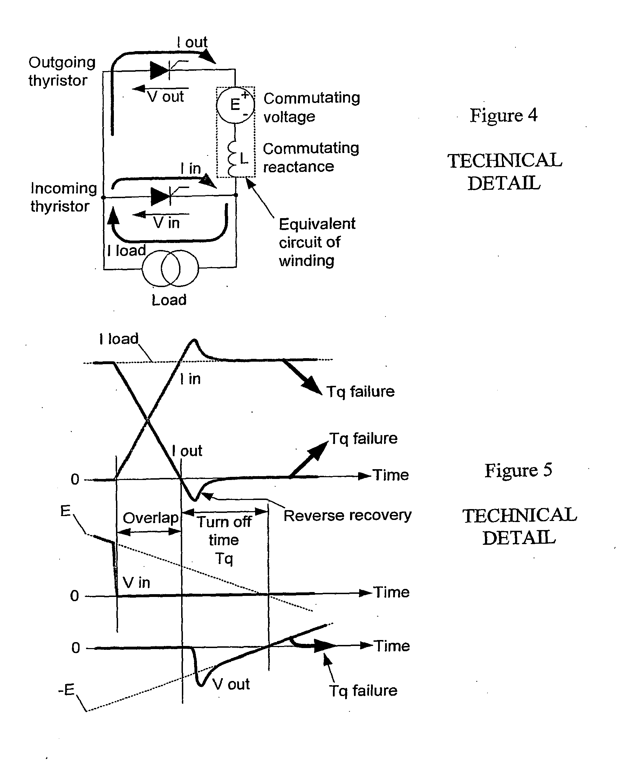

A generic commutation process for the incoming and outgoing thyristor of adjacent switching stages is shown in Figure 4 and 5. Figure 4 depicts the equivalent circuit definitions and Figure 5 shows idealised commutation waveforms.

With reference to Figure 4, a constant current source "I load" represents the current to be commutated out of the outgoing thyristor and into the incoming thyristor. The rate of change of commutated current is determined by the equivalent circuit representation of the stator winding and comprises a time-variable commuting voltage E and a commutating reactance having an inductance L. The outgoing thyristor carries a current "I out" and supports voltage "V out". The incoming thyristor carries current "I in" and supports voltage "V in".

The outgoing thyristor is considered to be latched on but un-gated at the start of the commutation process. When the incoming thyristor is gated on, the voltage "V in" collapses and current "I in" rises at a rate E/L. Since the current source "I Load" is constant, the current "I out" reduces at a rate E/L. The time taken for the current "I out" to reduce to zero is defined as the overlap. At the end of the overlap, the turn-off process begins in the outgoing thyristor. The turn-off process begins with the reverse recovery of the outgoing thyristor; initially the outgoing thyristor conducts in reverse, thereby causing the current "I in" to overshoot and the rate of change of current is determined by E/L. Eventually, towards the end of reverse recovery, the outgoing thyristor conductivity reduces causing the voltage "V out" to increase towards the time-variable commuting voltage -E. The effect of increasing the voltage "V out" is to force current out of the outgoing thyristor. At this time, the outgoing thyristor has not attained significant forward blocking capability, but it does have a reverse blocking capability. The voltage "V out" therefore overshoots as a result of the interruption of current in the stator winding. As commutation continues, the outgoing thyristor steady-state and the transient forward voltage blocking capability increase.

Eventually, the voltage "V out" reverses and the outgoing thyristor must support this voltage. The total time available for the outgoing thyristor to attain the required forward voltage blocking capability is known as the turn-off time Tq. This is the time between the negative going reversal of the current "I out" and the subsequent positive going reversal in the voltage "V out". If the turn-off time Tq is sufficient then the current "I out" remains at zero while the voltage "V out" tracks the time-variable commuting voltage E: However, if the turn-off time Tq is not sufficient then, as "V out" goes positive, the current "I out" will be re-established, the voltage "V out" will revert to the on state and the outgoing thyristor will have failed to turn off. This failure is sometimes called a "Tq failure" and can result in the destruction of the outgoing thyristor with the catastrophic malfunction in the associated equipment.

It will be readily appreciated that the rate of change of the currents "I in" and "I out" in such commutations has significant impact on the thyristor turn on dissipation, turn off dissipation and the time required to attain a forward blocking capability (Tq).

Only one thyristor of each switching stage is shown in Figure 4 because in the interest of clarity the load current "I load" is assumed to be unidirectional (that is from left to right as drawn). Both of the thyristors have the same polarity such that thyristor current flows from right to left as drawn, except during reverse recovery. However, in cases where the load current is subject to periodic reversal then each switching stage will incorporate a pair of thyristors of opposite polarity.

In principle, naturally commutated thyristors are ideal where the brushless dc rotating machine is used for motoring applications. However, performance limitations are significant when operating at low speeds because the optimum points of current entry into the stator winding are sited where there is inadequate coil voltage to cause reliable commutation. At high motoring torque and low speed the resulting commutation overlap duration leaves inadequate time for the thyristors to attain a forward blocking capability. External dc line commutation apparatus can be employed to overcome the limitations of natural commutation, but this can cause undesirable high amplitude torque pulsations and additional power losses to be generated.

### Summary of the Invention

The electronic commutator circuits of the present invention provide forced commutation means that can be embedded within a known electronic commutator to overcome its low speed torque limitation. The forced commutation means consists of forced commutation enhancements to the basic switching stage using a pair of thyristors. Capacitors may be pre-charged and synchronised to supplement the coil voltage when discharged, thereby reducing commutation overlap duration and maximising the turn-off time available to allow the thyristors to attain forward blocking capability.

More particularly, the present invention provides an electronic commutator circuit for use with a stator winding of a brushless dc electrical machine having a rated machine winding current, the stator winding having a number of coils linked by the same number of points of common coupling, the electronic commutator circuit comprising the same number of switching stages, each switching stage being connected between a respective one of the points of common coupling and first and second dc terminals and including capacitive commutation forcing means for selectively discharging a voltage into the stator winding, wherein each switching stage further includes:
a first thyristor having its anode connected to the first dc terminal,
a second thyristor having its cathode connected to the second dc terminal,
a first commutation forcing means associated with the first thyristor including a first capacitor connected to the point of common coupling for selectively discharging a voltage into the stator winding and a first diode connected between the cathode of the first thyristor and the point of common coupling and in parallel with the first capacitor, and
a second commutation forcing means associated with the second thyristor including a second capacitor connected to the point of common coupling for selectively discharging a voltage into the stator winding and a second diode connected between the anode of the second thyristor and the point of common coupling and in parallel with
the second capacitor;
wherein one of the switching stages further comprises a first reactor having:
a primary winding with a first terminal connected to the cathode of the first diode and the anode of the second diode, and a second terminal connected to the point of common coupling, and
a secondary winding magnetically coupled to the primary winding; and
wherein the first reactor includes a core that saturates at a small fraction of the rated machine winding current of the dc electrical machine.

The first commutation forcing means can further include a first diode connected between the cathode of the first thyristor and the point of common coupling with the first capacitor being connected in parallel with the first diode, and the second commutation forcing means can further include a second diode connected between the anode of the second thyristor and the point of common coupling with the second capacitor being connected in parallel with the second diode.

One of the switching stages of the electronic commutator circuit preferably further includes a first reactor having a primary winding and a secondary winding that is magnetically coupled to the primary winding. The primary winding has a first terminal that is preferably connected to the cathode of the first diode and the anode of the second diode, and a second terminal that is preferably connected to the point of common coupling.

The first reactor includes a core that saturates at a small fraction of the rated machine winding current of the dc electrical machine. The core saturation will preferably occur at a reactor winding current of less than 10% of the rated machine winding current. The saturated value of the reactor winding inductance is also preferably less than 1% of the inductance of the stator winding measured between two adjacent points of common coupling and is most preferably as small as is practically achievable. The ratio of the un-saturated value of the reactor winding inductance divided by the saturated value of the reactor winding inductance is preferably greater than a factor of 10 and is most preferably as large as is practically achievable. The objective of the saturable first reactor is to reduce the rate of change of the current in the associated first and second thyristors and hence reduce switching power losses. The reduction in the rate of change of the current is only needed at times of low current flow and at current reversals. The first reactor is therefore preferably non-obtrusive at all other times during the operation of the electronic commutator circuit. Hence the desire to employ the largest practical ratio of un-saturated to saturated inductance and the lowest possible saturation current.

The electronic commutator circuit may further include a second reactor (preferably having the same characteristics as the first reactor described above) having a primary winding and a secondary winding that is magnetically coupled to the primary winding. The primary winding of the second reactor has a first terminal that is preferably connected to the cathode of a first diode of a different one of the switching stages (that is a switching stage of the electronic commutator circuit that is not associated with the first reactor mentioned above) and the anode of a second diode associated with the different one of the switching stages. The primary winding of the second reactor also includes a second terminal that is preferably connected to the point of common coupling associated with the different one of the switching stages.

The secondary winding of the second reactor preferably includes a first terminal and a second terminal. The first terminal is preferably connected to the junction between the cathode of the first diode of the said one of the switching stages and the primary winding of the first reactor, and the junction between the anode of the second diode of the said one of the switching stages and the primary winding of the first reactor. The second terminal is preferably connected to the anode of the first diode of the said one of the switching stages through a first diode string or equivalent diode and to the cathode of the second diode of the said one of the switching stages through a second diode string or equivalent diode.

The diode strings or equivalent diodes provide a means of transferring power from the different one of the switching stages to the said one of the switching stages to charge up the first and second capacitors to provide the benefit of forced commutation within the said one of the switching stages. The power transfer takes place through the transformer action in the second reactor associated with the different one of the switching stages and by means of the rectifying action or the diode strings or equivalent diodes that connect the second terminal of the secondary winding of the second reactor to the first and second capacitors of the said one of the switching stages.

Diode strings may be employed for reasons of economy since it is unlikely that a single equivalent diode will have both a sufficiently small current rating and sufficiently high voltage blocking capability. However, single equivalent diodes can be used if a suitable component is available. If diode strings are employed then industry standard means must be used in order to ensure static and dynamic voltage sharing is effective, and to provide N+1 series redundancy if required. The reverse recovery parameters of the diode strings and the equivalent diodes must be appropriate for the pulse duty.

The action of passing current through the primary winding of a saturable reactor is to inject current into its secondary winding. One proviso to this is that the secondary winding must be connected to components having sufficiently low load impedance. In the electronic commutator circuit of the present invention, one of the diode strings or equivalent diodes and the associated capacitor that is employed to provide the benefit of forced commutation within the said one of the switching stages during a first half cycle of saturable reactor primary winding current represent a sufficiently low load impedance to permit a current to flow in the secondary winding of the second reactor only in the first half cycle of saturable reactor winding current. In the opposing half cycle of saturable reactor primary winding current, another diode string or equivalent diode and the associated capacitor that is employed to provide the benefit of forced commutation within the said one of the switching stages during the opposing half cycle of saturable reactor primary winding current represent a sufficiently low load impedance to permit a current to flow in the secondary winding of the second reactor only in the opposing half cycle of saturable reactor winding current.

The second reactor that provides the transfer of power to charge the first and second capacitors of the said one of the switching stages cannot be located within the said one of the switching stages but can be located within any other convenient switching stage. It is generally preferred that the first and second capacitors do not discharge excessively during the interval between charging and forced commutation discharge, and the offset (in other words the spacing in the circular or linear array of switching stages) between the different one of the switching stages associated with the second reactor and the said one of the switching stages associated with the first and second capacitors that are charged by the second reactor can be selected accordingly. In cases where the phase rotation of the points of common coupling is unidirectional, it is possible to configure the reactor phasing and the switching stage offset between the charge-providing reactors and their associated charge-receiving capacitors in order to minimise the effects of commutation capacitor discharge. In cases where the phase rotation of the points of common coupling is bidirectional and torque requirements are symmetrical with respect to rotation, it is necessary to configure the reactor phasing and the switching stage offset between the charge-providing reactors and their associated charge-receiving capacitors to be as near to symmetry as possible. In practice, it will be necessary to configure the switching stage offset between the charge-providing reactors and their associated charge-receiving capacitors to the minimum of one indexing step. Bidirectional systems with asymmetrical torque requirements may depart from symmetrical commutation capacitor charging according to an application-specific optimisation process.

The electronic commutator circuit may further include a pulse transformer having a primary winding connected to a switched mode power supply and a secondary winding magnetically coupled to the primary winding and having a first terminal and a second terminal. The first terminal of the secondary winding is preferably connected to the cathode of the first diode and the anode of the second diode. The second terminal of the secondary winding of the pulse transformer is preferably connected to the anode of the first diode through a first diode string or equivalent diode and to the cathode of the second diode through a second diode string or equivalent diode.

Charging the first and second capacitors using such a switched mode power supply and pulse transformer has the advantage of avoiding machine speed, direction and torque sensitivity by providing charging capacity at all times. In practice, any convenient number of switched mode power supplies may be used to feed any convenient number of pulse transformers. The pulse transformers may incorporate any convenient number of secondary windings. Furthermore, the above described saturable first and second reactors may have any convenient number of secondary windings and may be used in combination with a switched mode power supply and pulse transformer fed charging.

The first and second capacitors can also be charged by at least one galvanically isolated auxiliary power supply. A brushless dc machine using an electronic commutator circuit where the first and second capacitors are charged by at least one galvanically isolated auxiliary power supply would operate in a similar manner to the brushless dc rotating machine of British Patent Application 2117580. However, the capability of the electronic commutator circuit of the present invention is substantially independent of stator voltage and hence shaft speed or linear velocity. The fact that the electronic commutator circuit is independent of stator voltage means that it does not suffer from the operating problems that arise due to poor synchronisation of the control system with respect to the winding voltage. When multiple sources of power are provided for the purpose of charging a particular one of the first and second capacitors of each switching stage, each power source must have its own diode string or equivalent diode.

The electronic commutator circuit can be used with a dc rotating machine having a rotor, a stator, a stator winding having a number of coils linked by the same number of points of common coupling, where each switching stage of the electronic commutator circuit is connected between a respective one of the points of common coupling and first and second dc terminals.

The electronic commutator circuit can also be used with a dc linear machine comprising a translator, a stator, a stator winding having a number of coils linked by the same number of points of common coupling, where each switching stage of the electronic commutator circuit is connected between a respective one of the points of common coupling and first and second dc terminals.

The brushless dc electrical machine can be excited by any suitable means and the type of excitation has no effect on the operation and benefits of the electronic commutator circuit. The electronic commutator circuit can therefore be used with dc electrical machines with slip ring or brushless field systems, with conventional or high temperature superconducting or low temperature superconducting field windings, with permanent magnet rotors, in radial, axial and transverse flux orientation and in conventional, inside-out and double sided configurations.

### Drawings

Figure 1 is a schematic diagram showing a prior art stator winding and associated electronic commutator that replicates a conventional brush and commutator topology for an industry-standard lap wound stator where the brushes are replaced by thyristors and the commutator segments are replaced by a point of common coupling between associated pairs of thyristors;
Figure 2 is a schematic diagram showing a prior art stator winding and electronic commutator circuit in a linear form;
Figure 3 is a schematic diagram showing a single switching stage of the prior art electronic commutator circuit of Figure 2;
Figure 4 is a schematic diagram depicting equivalent circuit definitions for a generic commutation process using a pair of thyristors as a switching stage;
Figure 5 is waveform diagram showing the idealised commutation waveforms for the generic commutation process of Figure 4;
Figure 6A is a schematic diagram showing an electronic commutator circuit for a brushless dc electrical machine in accordance with the present invention;
Figure 6B is a schematic diagram showing a modification of the electronic commutator circuit of Figure 6A incorporating a pulse transformer;
Figures 7 to 10 are schematic diagrams showing the operation of the electronic commutator circuit of Figure 6A;
Figure 11 is a waveform diagram showing the thyristor waveforms for the electronic commutator circuit of Figure 6A when the brushless dc electrical machine is operating in a motoring mode;
Figure 12 is a waveform diagram showing the thyristor waveforms of Figure 11 in more detail;
Figure 13 is a waveform diagram showing the thyristor waveforms for the electronic commutator circuit of Figure 6A when the brushless dc electrical machine is operating in a generating mode;
Figure 14 is a schematic diagram showing an electronic commutator circuit for a brushless dc electrical machine that does not form part of the present invention; and Figures 15 to 20 are schematic diagrams showing the operation of the electronic commutator circuit of Figure 14.

In the interest of clarity, no switching aid networks (sometimes called snubbers) have been included in the Figures. However, it will be apparent to the skilled reader that in practice all of the electronic commutator circuits would include switching aid networks for the purpose of reducing the switching losses in the power electronic devices. The saturable reactors referred to below would also contribute to the overall effectiveness of the switching aid networks as well as providing the benefits described.

Although the electronic commutator circuits are described below with reference to a dc rotating machine, it can be adapted for use with dc linear machines. In the case of a linear machine, any use of the term "rotor" can be replaced by the term "translator", "moving member" or other suitable term as appropriate. The stator winding of linear machines and their electromagnetic relationship with the moving member will be subject to discontinuities at all stator and moving member ends, whereas the rotating brushless dc electrical machines mentioned below have continuous electromagnetic circuits.

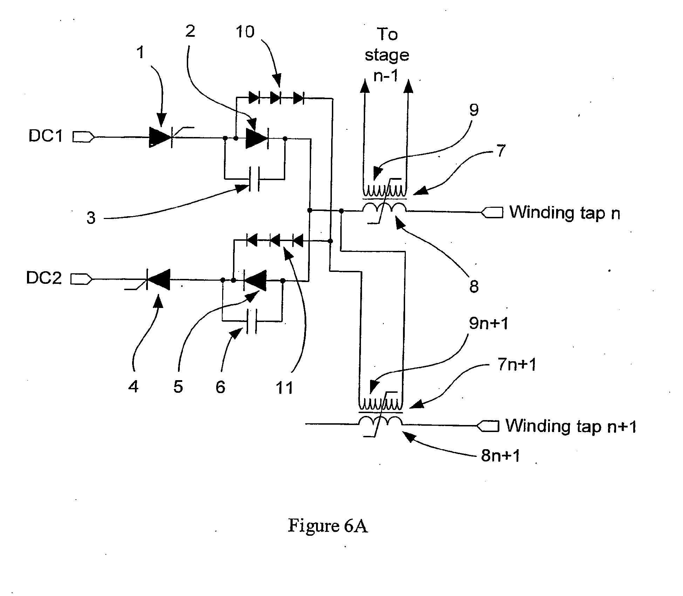

Figure 6A shows a electronic commutator circuit for a brushless dc electrical machine in accordance with the present invention. The circuit includes a first thyristor 1 connected in series with a first diode 2 and a second thyristor 4 connected in series with a second diode 5. The first and second diodes 2 and 5 are connected to the left side of a primary winding 8 of a reactor 7. The right side of the primary winding 8 is connected to a winding tap n of a stator winding having two coils per switching stage. The first diode 2 is connected to the primary winding 8 with the appropriate polarity so that current can flow from the dc terminal DC 1 to the winding tap n through the first thyristor 1, the first diode 2 and the primary winding 8 of the reactor 7. Similarly, the second diode 5 is connected to the primary winding with the appropriate polarity so that current can flow from the winding tap n to dc terminal DC2 through the primary winding 8, the second diode 5 and the second thyristor 4.

If the function of the reactor 7 is considered in isolation of the other electronic components (the first diode 2 is assumed to be a short circuit) then it can be appreciated that the core of the reactor is designed to be saturated at a small fraction of the rated machine winding current. When the primary winding 8 carries a current that is less than the current needed to saturate the core of the reactor 7 then the induction of the primary winding is at a maximum. On the other hand, when the primary winding 8 carries a current that is greater than the current needed to saturate the core of the reactor 7 then the induction of the primary winding is at a minimum. When the first thyristor 1 is turned on, the reactor 7 is not saturated because the current carried by the primary winding 8 is initially low and the primary winding inductance is beneficial in reducing the turn-on losses in the first thyristor. When the first thyristor 1 is commutated as a result of the action of a thyristor elsewhere in the electronic commutator circuit, the primary winding inductance is increased while the current carried by the primary winding 8 is near zero. The primary winding inductance is beneficial in reducing the turn-off losses in the first thyristor 1. The function of the reactor 7 is equally beneficial in reducing the turn-on and turn-off losses of the second thyristor 4.

In practice, the function of the reactor 7 is made more complicated by the presence of additional components. The interaction of these additional components with the reactor 7 will now be described. The electronic commutator circuit includes a first capacitor 3 connected in parallel with the first diode 2 and a second capacitor 6 connected in parallel with the second diode 5. An adjacent winding tap n+1 of the stator winding is connected to a similar reactor 7n+1. This reactor 7n+1 has a secondary winding 9n+1 whose output is used to charge up the first capacitor 3 by means of the half wave rectification effect of a first diode string 10. The output of the secondary winding 9n+1 can also be used to charge up the second capacitor 6 by means of the half wave rectification effect of a second diode string 11. It will be readily appreciated that saturable reactors with primary and secondary windings may be operated as pulse transformers, hence energy may be briefly transformed from the primary winding 8n+1 of the reactor 7n+1 to the first capacitor 3 and the second capacitor 6. The secondary winding 9 of the reactor 7 can also be used to charge a pair of capacitors (not shown) in the electronic commutator circuit associated with an adjacent winding tap n-1.

Given that the first and second capacitors 3 and 6 may be charged, their function with respect to the commutation of the first and second thyristors 1 and 4 will now be described. If the first capacitor 3 is charged such that the first diode 2 is reverse biased, and the primary winding impedance is neglected for reasons of clarity, the voltage across the first capacitor 3 is superimposed on the off state voltage that would normally be experienced by the first thyristor 1 of the known electronic commutator circuit of Figures 2 and 3. Therefore, when the first thyristor 1 is gated, the voltage across the first capacitor 3 enhances the rate of increase of current in the first thyristor 1 compared to the rate of increase of current experienced by the first thyristor 1 of the known electronic commutator circuit of Figure 3. Similarly, when the first thyristor 1 is gated, the voltage across the first capacitor 3 enhances the decrease of current in the outgoing thyristor (described elsewhere, but associated with this commutation) that would otherwise be experienced by the equivalent thyristor of the known electronic commutator circuit. A voltage across the second capacitor 6 can be used in the same way to enhance the commutations associated with the second thyristor 4. The increased rate of change of current in the first and second thyristors 1 and 4 causes the overlap angle to be reduced and hence the turn-off time of the thyristors to be increased, relative to the known electronic commutator circuit. By suitable design of the reactor 7, the rate of the commutation process can be significantly de-coupled from rotor speed and large currents can be reliably force commutated at low shaft speeds when the coil voltage is insufficient in its own right to cause reliable natural commutation.

The electronic commutator circuit described above could have a direction sensitivity that would be unacceptable in reversing variable speed drive applications. The commutation sequence in such a machine indexes one switching stage at a time, for example winding tap n-1, winding tap n, winding tap n+1, winding tap n+2 and so on according to the labelling convention of Figure 6A. In such an electronic commutator circuit, it is essential that the first and second capacitors 3 and 6 are appropriately charged prior to the gating of the first and second thyristors 1 and 4, respectively. It may therefore be more effective to charge these capacitors during the commutation from winding tap n+2 into winding tap n+1 (that is the commutation immediately preceding the commutation from winding tap n+1 into winding tap n) thereby minimising the duration between the capacitor charging and the switched discharging and reducing the risk that the capacitors might discharge prematurely. In this case, the interval between charging and switched discharging would be associated with the angular spacing of one stator winding pitch. Since each reactor 7 experiences two commutations for each complete revolution of the rotor of the dc electrical machine, and the interval between each commutation is 180 degrees at the stator fundamental frequency, if the dc electrical machine rotated in the opposite direction, the capacitor charging would be effected 180 degrees minus the angular spacing of one stator winding pitch, before switched discharging.

This direction sensitivity could be overcome by using a reactor that is located approximately 90 degrees at stator fundamental frequency to charge the first and second capacitors 3 and 6. In fact, the angular displacement between the secondary windings of the reactor and the associated first and second capacitors may be set at any convenient integer number of stator winding pitches. Moreover, multiple secondary windings can be employed to charge the first and second capacitors 3 and 6. In this case, each capacitor would require a diode string for each of the secondary windings.

The first and second diode strings 10 and 11 must have sufficient forward voltage drop to prevent an excessive proportion of the load current from diverting out of the first and second diodes 2 and 5 into the secondary winding 9n+1 of the reactor 7n+1. When the first and second diodes 2 and 5 are carrying load current, the proportion of load current that is diverted into the secondary winding 9n+1 must be significantly less than that required to saturate the reactor 7n+1.

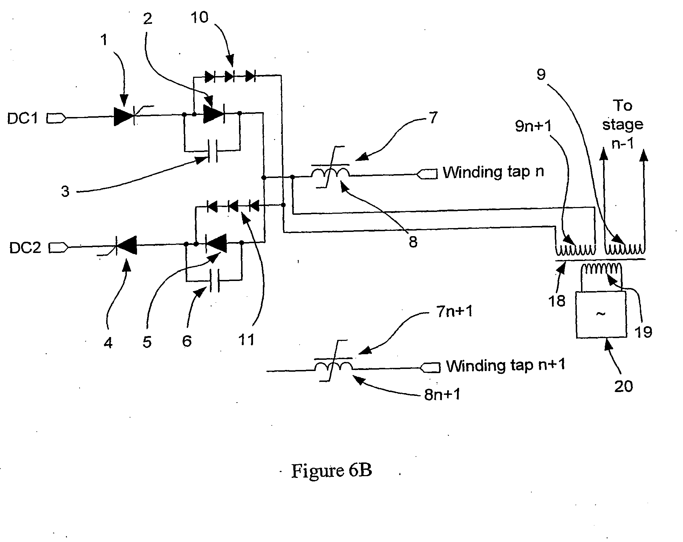

Another way of avoiding direction sensitivity is to employ galvanically isolated auxiliary power supplies (not shown) to charge the first and second capacitors 3 and 6. Pulse transformers may be employed for galvanic isolation purposes and the secondaries of the pulse transformers are substituted in place of the secondary winding 9 of the reactor 7. Any convenient number of pulse transformers and power supplies may be employed, the pulse transformers comprising as many secondary windings as necessary, in addition to a common primary winding. Figure 6B shows a modification of the electronic commutator circuit of Figure 6A where a switched mode power supply 20 is used to supply an ac voltage to a pulse transformer 18 having a primary winding 19. The secondary windings 9 and 9n+1 of the electronic commutator circuit Figure 6A are shown transposed to the pulse transformer 18 so that power can be transformed from the switched mode power supply 20 to the secondary windings 9 and 9n+1. In practice, the pulse transformer 18 may be fitted with as many secondary windings as is convenient. For example, four secondary windings 9, 9n+1, 9n+2 and 9n+3 may be fitted to the pulse transformer 18 and four secondary windings 9n+4, 9n+5, 9n+6 and 9n+7 may be fitted to a second pulse transformer (not shown), and so on. The pulse transformer 18 may be operated at a relatively high pulse repetition frequency, say about 20 kHz, in order to minimise its physical size and simplify the insulation design. The design of the pulse transformer 18 will be a compromise where cost is initially reduced and equipment is initially simplified by having as many secondary windings as is practical, up to a point where the pulse transformer secondary winding insulation, termination, manufacture and installation becomes excessively complicated as a result of having too many second windings. One means of simplification that is not shown in Figure 6B is to supply the primary winding of a number of pulse transformers from a single switched mode power supply. Each pulse transformer would have a convenient number of secondary windings while the switched mode power supply would benefit from the economies of scale in power rating.

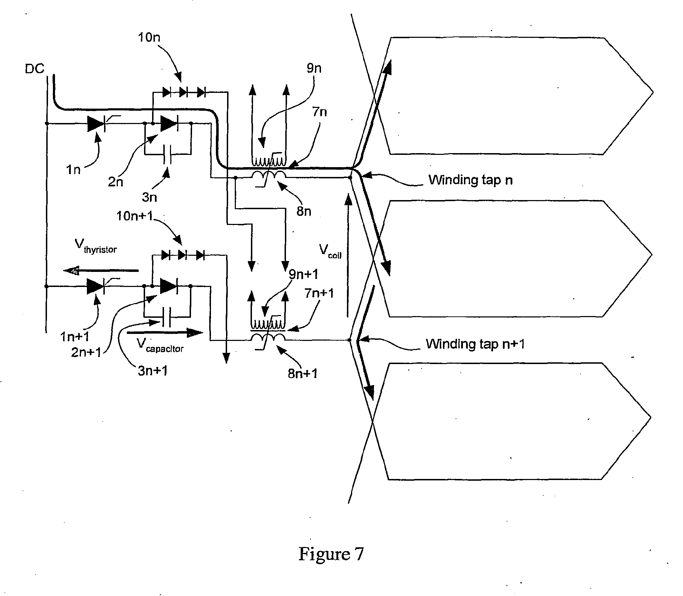

The operation of the electronic commutator circuit of Figure 6A will now be further described with reference to Figures 7 to 10. The operation is shown in the general case for a first switching stage associated with a winding tap n of the stator winding and a second switching stage associated with an adjacent winding tap n+1 of the stator winding. The commutation sequence is configured to index the winding current entry and exit points in the stator winding, whilst keeping in step with the rotation of the field associated with the rotor of the dc electrical machine. The situation described below is where load current from a first thyristor is commutated into a second thyristor whilst current continues to flow in a third thyristor.

For all practical purposes, the commutation sequence that takes place at the exit point of the stator winding is independent of the commutation sequence that takes place at the entry point of the stator winding. The commutations at the exit and entry points may take place simultaneously, or the entry point commutation may be in advance of the exit point commutation or *vice versa,* but the timing skew must not be sufficiently large for circulating currents to flow around the polygonal winding. In any event, the commutation sequence is identical. The detailed description with reference to Figure 7 to 10 therefore concentrates on the commutation from the first thyristor In associated with a first winding tap n to the first thyristor 1n+1 associated with an adjacent winding tap n+1. The commutation from the second thyristor 4n associated with the first winding tap n to the second thyristor 4n+1 associated with the adjacent winding tap n+1 is identical apart from the fact that the current and voltage polarities are reversed. When the commutation at the entry point of the stator winding is from the first thyristor In to the first thyristor 1n+1 it follows that the commutation at the exit point of the stator winding is from a second thyristor 4n+m to a second thyristor 4n+m+1, where m is an offset according to one half of the number of points of common coupling in a particular polygonal or lap winding. As successive commutations cause indexing of the entry and exit points of the stator winding, so an entry point will eventually become an exit point 180 degrees of the stator fundamental frequency later.

Prior to commutation, winding current is assumed to be flowing through the stator winding, entering at an entry point in the stator winding and exiting at a exit point in the stator winding as shown in Figure 2. The starting point of the commutation is shown in Figure 7. The capacitor 3n+1 associated with the winding tap n+1 is charged to an initial voltage Vcapacitor and is connected to the point in the stator winding into which load current is to be transferred. The thyristor 1n+1 associated with the capacitor 3n+1 experiences a forward voltage Vthyristor equal to the sum of capacitor voltage Vcapacitor and the coil voltage Vcoil. The presence of the capacitor voltage Vcapacitor allows the thyristor 1n+1 associated with the winding tap n+1 to turn on rapidly when gated, even when the coil voltage Vcoil would not normally be sufficient to promote such a rapid turn on by itself.

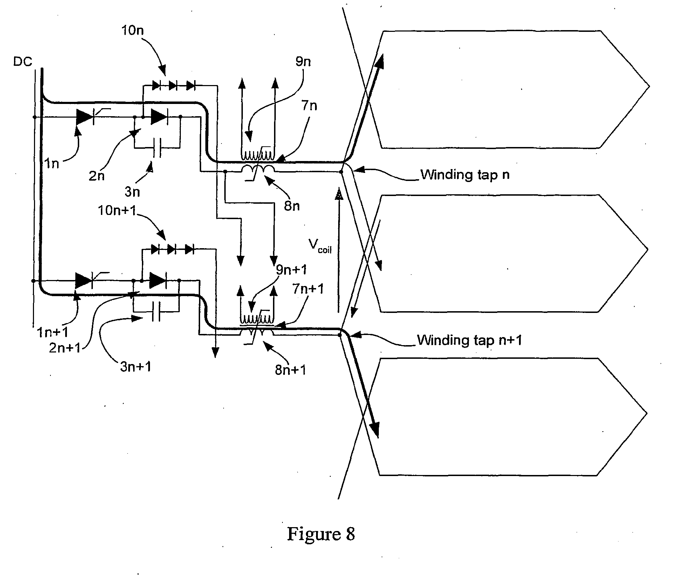

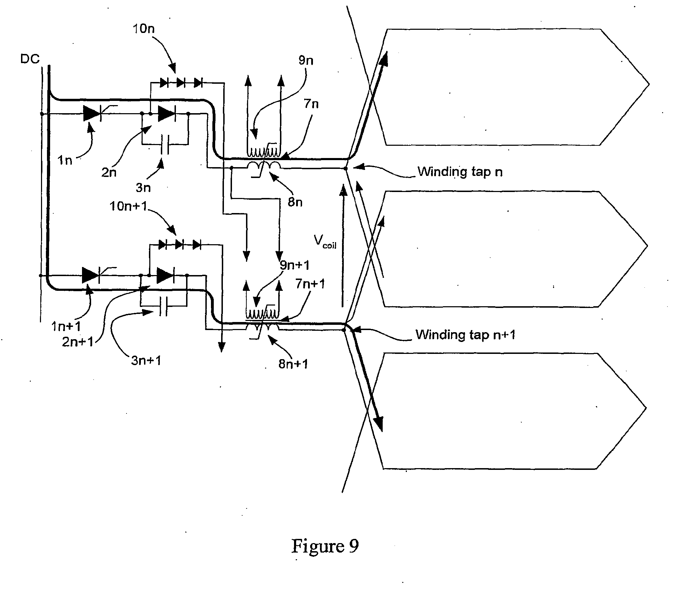

The commutation of current is initiated by firing the thyristor 1n+1, as shown in Figure 8. As the forward voltage Vthyristor experienced by the thyristor 1n+1 collapses, voltage is applied to the reactor 7n+1 and current begins to increase with a low initial rate of change (di/dt). The current flow increases further until the reactor 7n+1 saturates (at a fraction of the rated machine winding current) and the rate of change (di/dt) of the current increases as a result of the reduction in the reactor inductance. The current flow is initially through the capacitor 3n+1, causing it to discharge until the current transfers to the diode 2n+1. This eventually results in a reversal of current flow in the coils of the stator winding between the winding tap n and winding tap n+1 as shown in Figure 9.

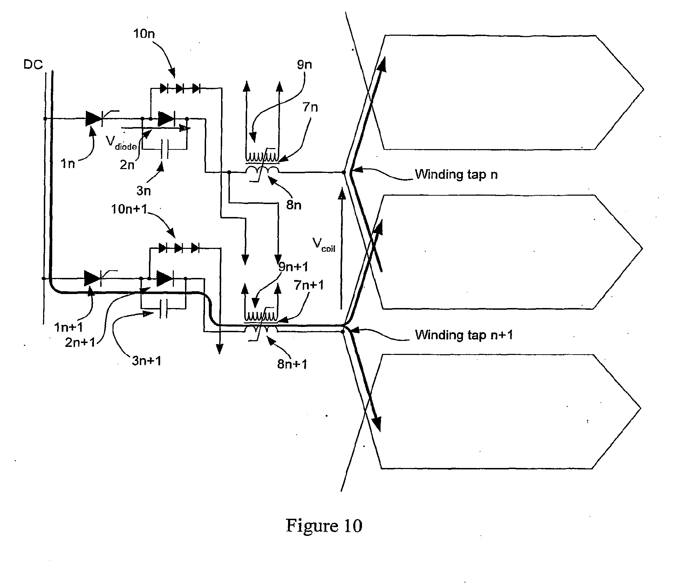

As the commutation process continues, the current in the thyristor 1n decreases towards zero. The diode 2n is selected to have a faster reverse recovery than the thyristor In and it will therefore begin to support the reverse voltage before the thyristor In has completed reverse recovery. This ensures that the reverse recovery loss in the thyristor In is minimised, however the coil voltage Vcoil must remain positive for a sufficient length of time for the thyristor In to recover fully so as to avoid a turn-off time (Tq) failure. The recovery process of the diode 2n and the thyristor In is assisted by the presence of the saturable reactor 7n, whose inductance causes the rate of change (di/dt) of the current to reduce in the thyristor In as the current approaches zero and its core desaturates. This reduces the reverse recovery current. Figure 10 shows the state of the switching stage after the commutation process has ended.

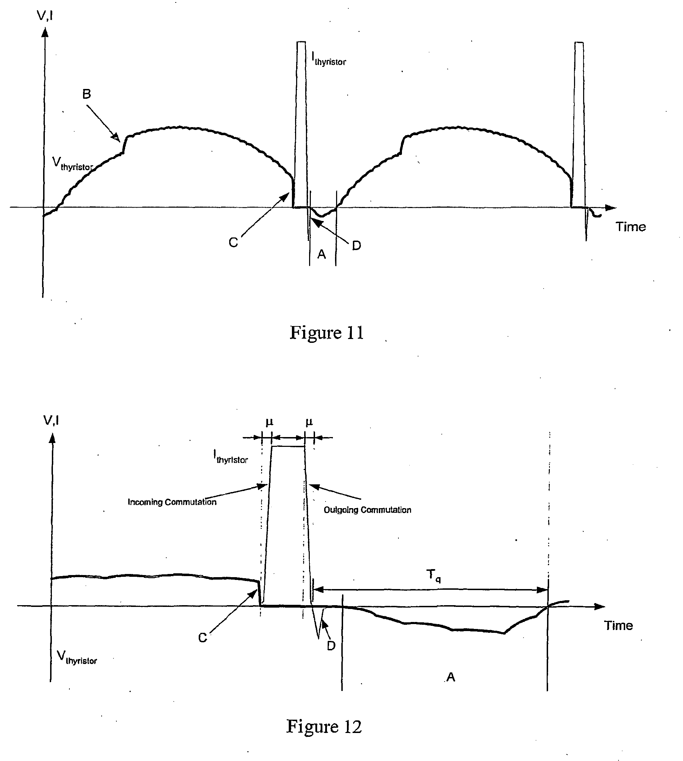

The thyristor waveforms when the dc electrical machine is operating in a motoring mode (that is when current is supplied to the series connected coils of the stator winding through the electronic commutator circuit) take a form similar to those shown in Figure 11. The proportion of time (labelled "A") during which the thyristors are reverse biased is relatively small and the voltage ripple is dependent on the number of coils in the stator winding. The soft reverse recovery current of the thyristor is clearly shown. The part of the waveform labelled "B" represents the time during which charge is injected into the associated capacitor increasing the thyristor voltage Vthyristor. The part of the waveform labelled "C" represents the time when the thyristor is gated on. The part of the waveform labelled "D" represents the soft reverse recovery current of the thyristor. In Figure 12 the waveform of Figure 11 has been further expanded to better show the commutation process and in particular the thyristor turn-off time Tq and overlap µ.

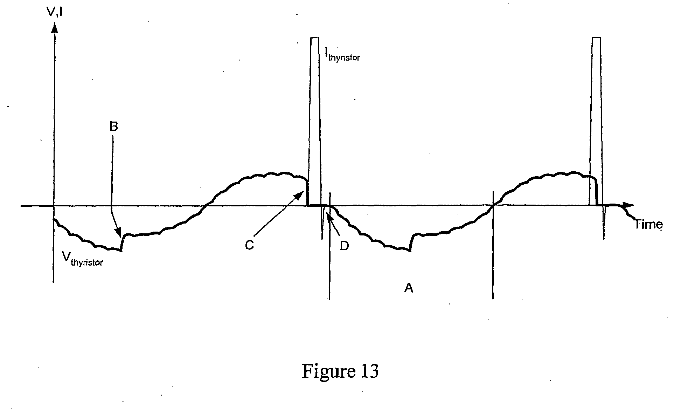

The thyristor waveforms when the dc electrical machine is operating in a generating mode (that is when current is supplied from the series connected coils of the stator winding through the electronic commutator circuits) take a form similar to those shown in Figure 13. The proportion of time (labelled "A") during which the thyristors are reverse biased is relatively large. The soft reverse recovery current of the thyristor is clearly shown. The part of the waveform labelled "B" represents the time during which charge is injected into the associated capacitor increasing the thyristor voltage Vthyristor increases. The part of the waveform labelled "C" represents the time when the thyristor is gated on. The part of the waveform labelled "D" represents the soft reverse recovery current of the thyristor.

In a dc electrical machine that is capable of both motoring and generating applications, the dc terminal current flow is unidirectional with the polarity being determined by the polarity of the thyristors with respect to the associated dc terminals. Control of the motoring and generating modes may be affected by regulating the point of firing of the thyristors with respect to the position of the rotor, thereby permitting regulation and reversal of the mean value of the dc terminal voltage according to the well-known thyristor converter phase control principle. This allows the proportion of time during which the thyristors are reverse biased to be adjusted. The direction of rotation can also be controlled with respect to the polarity of the dc terminal voltage by means of phase control. The operating point of the dc electrical machine may also be controlled by regulating the dc terminal current by external means such as, for example, by means of a thyristor supply bridge, which may be capable of rectification and inversion.

The electrically commutated dc electrical machine can therefore be operated in the following mode:
(i) as a generator whose dc output voltage is approximately proportional to its winding voltage;
(ii) as a generator whose dc output voltage may be regulated with respect to its winding voltage and which may therefore be used to self-limit dc side fault current;
(iii) as a motor whose dc terminal voltage is approximately proportional to its winding voltage;
(iv) as a motor whose dc terminal voltage may be regulated with respect to its winding voltage and which may therefore be used to actively control its operational performance or contribute to the control of its operational performance; or
(v) as a machine that is capable of motoring and generating, by means of regulation of the magnitude and polarity of its dc terminal voltage with respect to its winding voltage and which may therefore be used in well-known "four quadrant" applications.

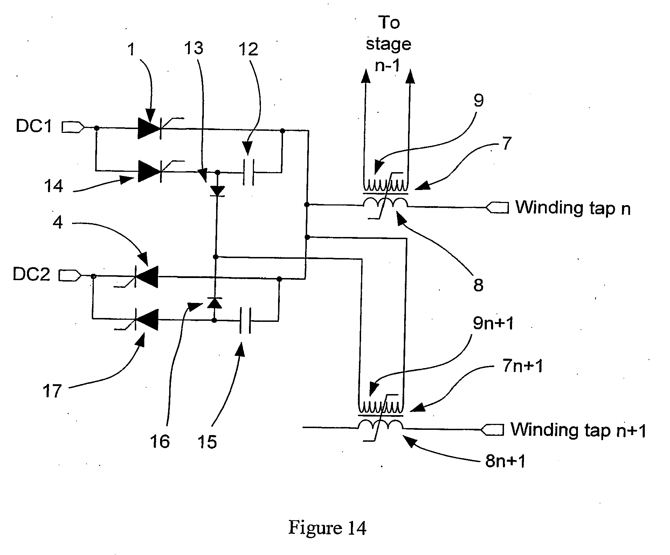

Figure 14 shows an electronic commutator circuit for a dc electrical machine that does not form part of the present invention. The circuit includes a first thyristor 1 and a second thyristor 4 connected to the left side of a primary winding 8 of a reactor 7. The right side of the primary winding 8 is connected to a winding tap n of a stator winding. The first thyristor 1 is connected to the primary winding 8 with the appropriate polarity so that current can flow from the dc terminal DC1 to the winding tap n through the first thyristor and the primary winding 8 of the reactor 7. Similarly, the second thyristor 4 is connected to the primary winding with the appropriate polarity so that current can flow from the winding tap n to dc terminal DC2 through the primary winding 8 and the second thyristor.

The reactor 7 functions in the same way as the reactor of the electronic commutator circuit of Figure 6A described above. Similarly, first and second capacitors 12 and 15 function in the same way as the first and second capacitors 3 and 6 of the electronic commutator circuit of Figure 6A described above, except that their switched discharges are initiated by gating third and fourth auxiliary thyristors 14 and 17, respectively. Since the action of firing the auxiliary thyristors 14 and 17 causes the first and second thyristors 1 and 4 to be momentarily reverse biased, the gating of the first and second thyristors must be delayed momentarily with respect to the firing of the auxiliary thyristors in order to allow them to become forward biased and turn-on reliably and in doing so, commutating the auxiliary thyristors 14 and 17, respectively. The function of the first and second thyristors 1 and 4 is otherwise as described with reference to the electronic commutator circuit of Figure 6A described above.

The function of first and second diodes 13 and 16 is exactly as described for diode strings 10 and 11, respectively, of the electronic commutator circuit of Figure 6A, but there is no requirement for a series connected string of diodes in order to develop a high forward voltage drop because the commutation of the auxiliary thyristors 14 and 17 causes current to be commutated out of the secondary winding 9n+1 of the reactor 7n+1.

The charging of the first and second capacitors 12 and 15 can also be carried out using pulse transformer galvanically isolated power supplies, as described in more detail above with reference to the electronic commutator circuit of Figure 6A.

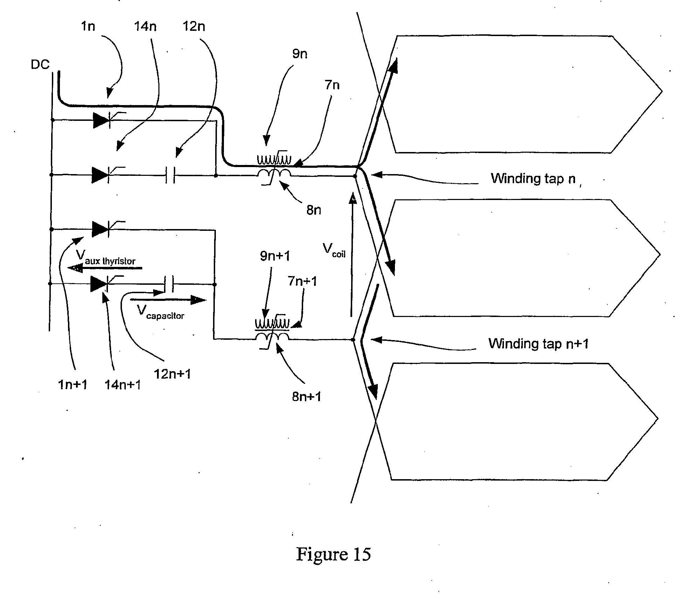

The operation of the electronic commutator circuit of Figure 14 will now be further described with reference to Figures 15 to 20. The operation is shown in the general case for a first switching stage associated with a winding tap n of the stator winding and a second switching stage associated with an adjacent winding tap n+1 of the stator winding. Once again, the commutation sequence is configured to index the winding current entry and exit points in the stator winding, whilst keeping in step with the rotation of the field associated with the rotor of the dc electrical machine. The situation described below is where load current from a first thyristor is commutated into a second thyristor whilst current continues to flow in a third thyristor. The commutation is initiated by an auxiliary thyristor.

Prior to commutation, winding current is assumed to be flowing through the stator winding, entering at an entry point in the stator winding and exiting at a exit point in the stator winding as shown in Figure 2. The starting point of the commutation is shown in Figure 15. The capacitor 12n+1 is charged to an initial voltage Vcapacitor and is connected to the point in the stator winding into which load current is to be transferred. The auxiliary thyristor 14n+1 associated with the capacitor 12n+1 experiences a forward voltage Vaux_thyristor equal to the sum of capacitor voltage Vcapacitor and the coil voltage Vcoil. The presence of the capacitor voltage Vcapacitor allows the auxiliary thyristor 14n+1 to turn on rapidly when gated, even when the coil voltage Vcoil would not normally be sufficient to promote such a rapid turn on by itself.

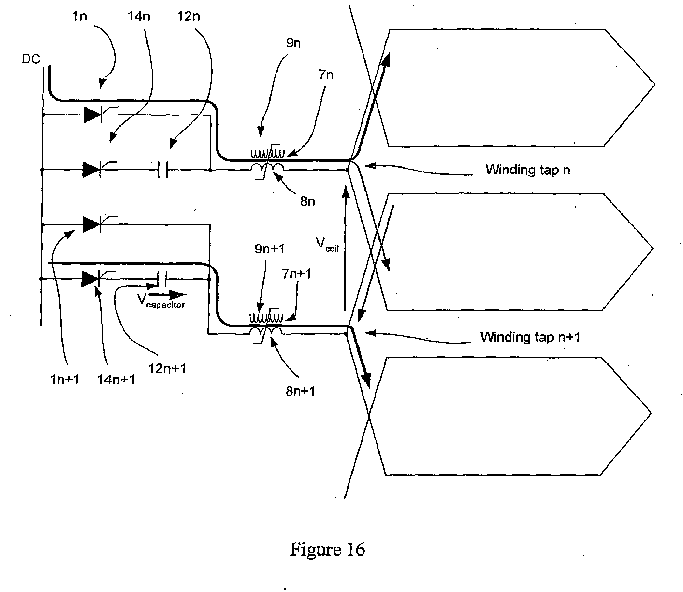

The commutation of current is initiated by firing the auxiliary thyristor 14n+1, as shown in Figure 16. As the forward voltage Vaux_thyristor experienced by the auxiliary thyristor 14n+1 collapses, voltage is applied to the reactor 7n+1 and current begins to increase with a low initial rate of change (di/dt). This current flows through the auxiliary thyristor 14n+1 and the capacitor 12+1. This current flow increases further until the reactor 7n+1 saturates (at a fraction of the rated machine winding current) and the rate of change (di/dt) of the current increases as a result of the reduction in the reactor inductance. As this current increases, the current in the winding tap n from the thyristor In reduces. The flow of current through the capacitor 12n+1 causes the capacitor voltage Vcapacitor to reduce.

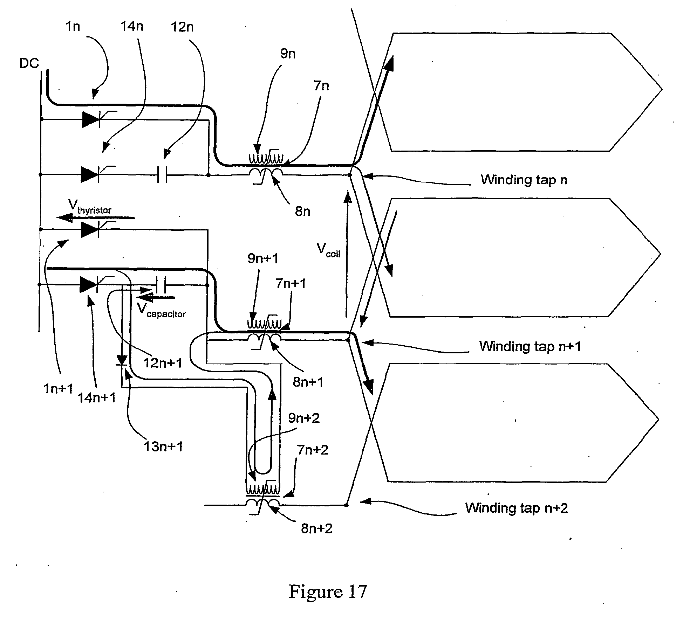

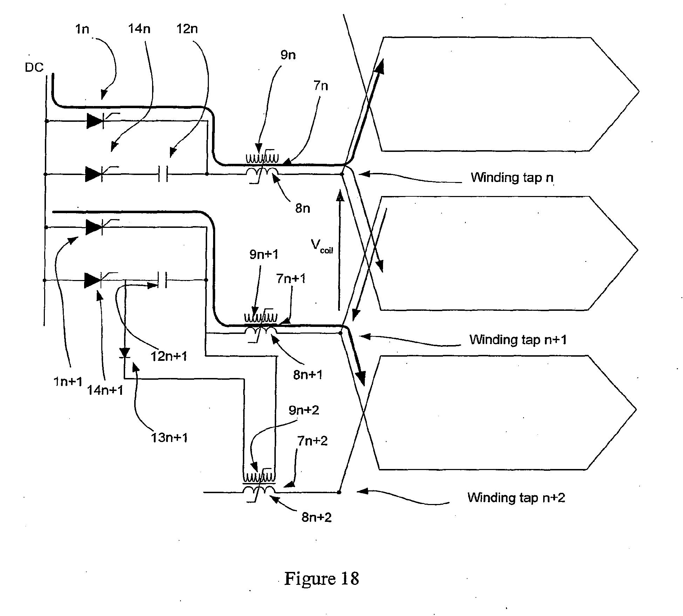

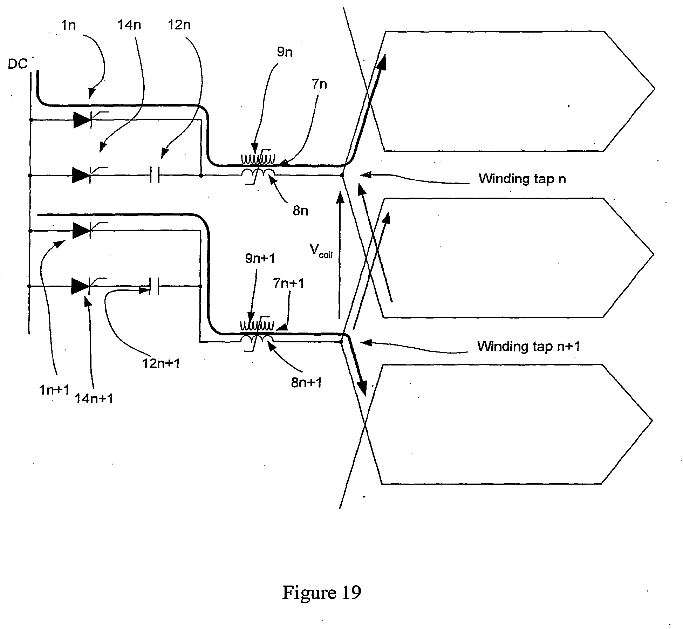

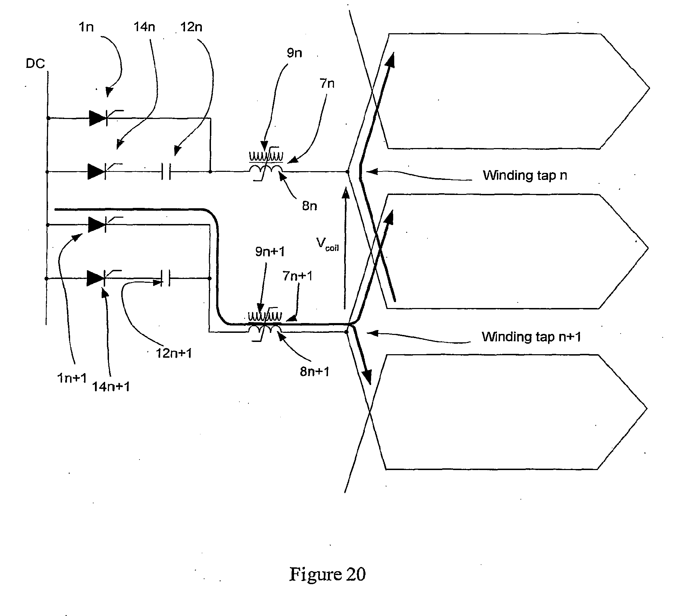

The flow of current through the capacitor 12n+1 eventually causes the capacitor voltage Vcapacitor to reverse, thereby causing the thyristor 1n+1 to become forward biased and also causing current to flow in the diode 13n+1 and the secondary winding of its associated reactor 7n+2, as shown in Figure 17. This reversal in the capacitor voltage Vcapacitor is sensed by a suitable control means (not shown) and this may cause the thyristor 1n+1 to be gated. The thyristor 14n+1 is therefore commutated and the winding current transfers into the thyristor 1n+1. Current is also interrupted in the diode 13n+1 and its associated reactor 7n+2 as shown in Figure 18. The continued increase in the current flowing in the thyristor 1n+1 eventually results in a reversal of current flow in the coils of the stator winding between the winding tap n and the winding tap n+1 as shown in Figure 19. This is then followed by the reverse recovery of the thyristor In as shown in Figure 20.

The coil voltage Vcoil must remain positive for a sufficient length of time for the thyristor I n to recover fully so as to avoid a turn-off time (Tq) failure. The recovery process of the thyristor In is assisted by the presence of the saturable reactor 7n, whose inductance causes the rate of change (di/dt) of the current to reduce in the thyristor 1n as the current approaches zero and its core desaturates. The thyristor waveforms are similar to those for the electronic commutator circuit of Figure 6A, as shown in Figures 11 to 13. The principal difference is the momentary reverse biasing of the thyristor 14n+1 prior to its turn on.

The electronic commutator circuit of Figure 14 provides a dc electrical machine with the same operational capability and characteristics as the electronic commutator circuit of Figure 6A.

## Claims

1. An electronic commutator circuit for use with a stator winding of a brushless dc electrical machine having a rated machine winding current, the stator winding having a number of coils linked by the same number of points of common coupling (Winding tap n, Winding tap n+1), the electronic commutator circuit comprising the same number of switching stages, each switching stage being connected between a respective one of the points of common coupling (Winding tap n, Winding tap n+1) and first and second dc terminals (DC1, DC2) and including capacitive commutation forcing means for selectively discharging a voltage into the stator winding, wherein each switching stage further includes:
a first thyristor (1) having its anode connected to the first dc terminal (DC1),
a second thyristor (4) having its cathode connected to the second dc terminal (DC2),
a first commutation forcing means associated with the first thyristor (1) including a first capacitor (3) connected to the point of common coupling (Winding tap n) for selectively discharging a voltage into the stator winding and a first diode (2) connected between the cathode of the first thyristor (1) and the point of common coupling (Winding tap n) and in parallel with the first capacitor (3), and
a second commutation forcing means associated with the second thyristor (4) including a second capacitor (6) connected to the point of common coupling (Winding tap n) for selectively discharging a voltage into the stator winding and a second diode (5) connected between the anode of the second thyristor (4) and the point of common coupling (Winding tap n) and in parallel with the second capacitor (6);
wherein one of the switching stages further comprises a first reactor (7) having:
a primary winding (8) with a first terminal connected to the cathode of the first diode (2) and the anode of the second diode (5), and a second terminal connected to the point of common coupling (Winding tap n), and
a secondary winding (9) magnetically coupled to the primary winding (8); and
wherein the first reactor (7) includes a core that saturates at a small fraction of the rated machine winding current of the dc electrical machine.

2. An electronic commutator circuit according to claim 1, further comprising a second reactor (7n+1) having a primary winding (8n+1) with a first terminal connected to the cathode of a first diode associated with a different one of the switching stages, and the anode of a second diode associated with a different one of the switching stages, and a second terminal connected to the point of common coupling (Winding tap n+1) associated with the different one of the switching stages, and
a secondary winding (9n+1) magnetically coupled to the primary winding (8n+1) with a first terminal connected to:
(i) the junction between the cathode of the first diode (2) of the said one of the switching stages and the primary winding (8) of the first reactor (7), and
(ii) the junction between the anode of the second diode (5) of the said one of the switching stages and the primary winding (8) of the first reactor (7), and
a second terminal connected to:
(i) the anode of the first diode (2) through a first diode string or equivalent diode (10), and
(ii) the cathode of the second diode (5) through a second diode string or equivalent diode (11).

3. An electronic commutator circuit according to claim 2, wherein the different one of the switching stages is adjacent to said one of the switching stages associated with the first reactor (7).

4. An electronic commutator circuit according to claim 2, wherein the second reactor (7n+1) associated with the different one of the switching stages and the first reactor (7) are offset by an integer number of switching stages.

5. An electronic commutator circuit according to any preceding claim, further comprising a pulse transformer (18) having a primary winding (19) connected to a switched mode power supply (20) and a secondary winding (9n+1) magnetically coupled to the primary winding (19), the secondary winding (9n+1) having a first terminal connected to the cathode of the first diode (2) and the anode of the second diode (5), and a second terminal connected to the anode of the first diode (2) through a first diode string or equivalent diode (10) and to the cathode of the second diode (5) through a second diode string or equivalent diode (11).

6. An electronic commutator circuit according to any preceding claim, wherein the first and second capacitors are charged by at least one galvanically isolated auxiliary power supply.

7. A brushless dc rotating machine comprising a rotor, a stator, a stator winding having a number of coils linked by the same number of points of common coupling, and an electronic commutator circuit according to any preceding claim, wherein each switching stage of the electronic commutator circuit is connected between a respective one of the points of common coupling and first and second dc terminals.

8. A dc linear machine comprising a translator, a stator, a stator winding having a number of coils linked by the same number of points of common coupling, and an electronic commutator circuit according to any of claims 1 to 6, wherein each switching stage of the electronic commutator circuit is connected between a respective one of the points of common coupling and first and second dc terminals.

## Patentansprüche

1. Elektronische Kommutatorschaltung zur Verwendung mit einer Statorwicklung eines bürstenlosen Gleichstrommotors, der einen Nenn-Motorwicklungsstrom besitzt, wobei die Statorwicklung eine Anzahl von Spulen besitzt, die durch die gleiche Anzahl gemeinsamer Kopplungspunkte (Wicklungsabgriff n, Wicklungsabgriff n + 1) verbunden sind, wobei die elektronische Kommutatorschaltung die gleiche Anzahl von Schaltstufen umfasst, wobei jede Schaltstufe zwischen einen Entsprechenden der gemeinsamen Kopplungspunkte (Wicklungsabgriff n, Wicklungsabgriff n + 1) und einen ersten und einen zweiten Gleichstromanschluss (DC1, DC2) geschaltet ist und kapazitive Umschalt-Erzwingungsmittel enthält, um eine Spannung wahlweise in die Statorwicklung zu entladen, wobei jede Schaltstufe ferner umfasst:
einen ersten Thyristor (1), dessen Anode mit dem ersten Gleichstromanschluss (DC1) verbunden ist,
einen zweiten Thyristor (4), dessen Katode mit dem zweiten Gleichstromanschluss (DC2) verbunden ist,
ein erstes Umschalt-Erzwingungsmittel, das dem ersten Thyristor (1) zugeordnet ist und einen ersten Kondensator (3), der mit dem gemeinsamen Kopplungspunkt (Wicklungsabgriff n) verbunden ist, um eine Spannung wahlweise in die Statorwicklung zu entladen, und eine erste Diode (2), die zwischen die Katode des ersten Thyristors (1) und den gemeinsamen Kopplungspunkt (Wicklungsabgriff n) und parallel zu dem ersten Kondensator (3) geschaltet ist, enthalten, und
ein zweites Umschalt-Erzwingungsmittel, das dem zweiten Thyristor (4) zugeordnet ist und einen zweiten Kondensator (6), der mit dem gemeinsamen Kopplungspunkt (Wicklungsabgriff n) verbunden ist, um wahlweise eine Spannung in die Statorwicklung zu entladen, und eine zweite Diode (5), die zwischen die Anode des zweiten Thyristors (4) und den gemeinsamen Kopplungspunkt (Wicklungsabgriff n) und parallel zu dem zweiten Kondensator (6) geschaltet ist, enthält;
wobei eine der Schaltstufen ferner eine erste Drosselspule (7) enthält, die umfasst:
eine Primärwicklung (8), wovon ein erster Anschluss mit der Katode der ersten Diode (2) und mit der Anode der zweiten Diode (5) verbunden ist, und ein zweiter Anschluss mit dem gemeinsamen Kopplungspunkt (Wicklungsabgriff n) verbunden ist, und
eine Sekundärwicklung (9), die mit der Primärwicklung (8) magnetisch gekoppelt ist; und
wobei die erste Drosselspule (7) einen Kern aufweist, der bei einem kleinen Anteil des Nenn-Motorwicklungsstroms des Gleichstromelektromotors sättigt.

2. Elektronische Kommutatorschaltung nach Anspruch 1, die ferner eine zweite Drosselspule (7n + 1) umfasst, die versehen ist mit einer Primärwicklung (8n + 1), wovon ein erster Anschluss mit der Katode einer ersten Diode, die einer Anderen der Schaltstufen zugeordnet ist, und mit der Anode einer zweiten Diode, die einer Anderen der Schaltstufen zugeordnet ist, verbunden ist und wovon ein zweiter Anschluss mit dem gemeinsamen Kopplungspunkt (Wicklungsabgriff n + 1), der der Anderen der Schaltstufen zugeordnet ist, verbunden ist, und
mit einer zweiten Wicklung (9n + 1), die mit der Primärwicklung (8n + 1) magnetisch gekoppelt ist und wovon ein erster Anschluss verbunden ist mit:
(i) dem Verbindungspunkt zwischen der Katode der ersten Diode (2) der Einen der Schaltstufen und der Primärwicklung (8) der ersten Drosselspule (7) und
(ii)dem Verbindungspunkt zwischen der Anode der zweiten Diode (5) der Einen der Schaltstufen und der Primärwicklung (8) der ersten Drosselspule (7), und
und ein zweiter Anschluss verbunden ist mit:
(i) der Anode der ersten Diode (2) durch eine erste Diodenkette oder eine äquivalente Diode (10) und
(ii)der Katode der zweiten Diode (5) durch eine zweite Diodenkette oder eine äquivalente Diode (11).

3. Elektronische Kommutatorschaltung nach Anspruch 2, wobei die Andere der Schaltstufen zu der einen der Schaltstufen, der die erste Drosselspule (7) zugeordnet ist, benachbart ist.

4. Elektronische Kommutatorschaltung nach Anspruch 2, wobei die zweite Drosselspule (7n + 1), die der Anderen der Schaltstufen zugeordnet ist, und die erste Drosselspule (7) um eine ganze Zahl von Schaltstufen versetzt sind.

5. Elektronische Kommutatorschaltung nach einem vorhergehenden Anspruch, die ferner einen Impulstransformator (18) umfasst, der versehen ist mit einer Primärwicklung (19), die mit einer geschalteten Stromversorgung (20) verbunden ist, und mit einer Sekundärwicklung (9n + 1), die mit der Primärwicklung (19) magnetisch gekoppelt ist, wobei die Sekundärwicklung (9n + 1) mit einem ersten Anschluss mit der Katode der ersten Anode (2) und mit der Anode der zweiten Diode (5) verbunden ist und mit einem zweiten Anschluss durch eine erste Diodenkette oder eine äquivalente Diode (10) mit der Anode der ersten Diode (2) und durch eine zweite Diodenkette oder eine äquivalente Diode (11) mit der Katode der zweiten Diode (5) verbunden ist.

6. Elektronische Kommutatorschaltung nach einem vorhergehenden Anspruch, wobei der erste und der zweite Kondensator durch wenigstens eine galvanisch isolierte Hilfsstromversorgung geladen werden.

7. Bürstenloser Gleichstrom-Drehmotor, der einen Rotor, einen Stator, eine Statorwicklung mit einer Anzahl von Spulen, die durch die gleiche Anzahl von gemeinsamen Kopplungspunkten verbunden sind, und eine elektrische Kommutatorschaltung nach einem vorhergehenden Anspruch umfasst, wobei jede Schaltstufe der elektronischen Kommutatorschaltung zwischen einem Entsprechenden der gemeinsamen Kopplungspunkte und den ersten und den zweiten Gleichstromanschluss geschaltet ist.

8. Gleichstrom-Linearmotor, der einen Umwerter, einen Stator, eine Statorwicklung mit einer Anzahl von Spulen, die durch die gleiche Anzahl gemeinsamer Kopplungspunkte verbunden sind, und eine elektronische Kommutatorschaltung nach einem der Ansprüche 1 bis 6 umfasst, wobei jede Schaltstufe der elektronischen Kommutatorschaltung zwischen einen Entsprechenden der gemeinsamen Kopplungspunkte und den ersten und den zweiten Gleichstromanschluss geschaltet ist.

## Revendications

1. Circuit de commutateur électronique destiné à être utilisé avec un enroulement de stator d'une machine électrique à courant continu sans balai qui présente un courant d'enroulement de machine nominal, l'enroulement de stator présentant un certain nombre de bobines reliées par le même nombre de points de raccordement commun (prise d'enroulement n, prise d'enroulement n + 1), le circuit de commutateur électronique comprenant le même nombre d'étages de commutation, chaque étage de commutation étant connecté entre l'un respectif des points de raccordement commun (prise d'enroulement n, prise d'enroulement n + 1) et des première et deuxième bornes de courant continu (DC1, DC2) et comprenant des moyens capacitifs destinés à forcer une commutation afin de décharger de manière sélective une tension dans l'enroulement de stator, dans lequel chaque étage de commutation comprend en outre :
un premier thyristor (1) dont l'anode est connectée à la première borne de courant continu (DC1),
un deuxième thyristor (4) dont la cathode est connectée à la deuxième borne de courant continu (DC2),
des premiers moyens destinés à forcer une commutation associés au premier thyristor (1) comprenant un premier condensateur (3) connecté au point de raccordement commun (prise d'enroulement n) afin de décharger de manière sélective une tension dans l'enroulement de stator et une première diode (2) connectée entre la cathode du premier thyristor (1) et le point de raccordement commun (prise d'enroulement n) et en parallèle avec le premier condensateur (3), et
des deuxièmes moyens destinés à forcer une commutation associés au deuxième thyristor (4) comprenant un deuxième condensateur (6) connecté au point de raccordement commun (prise d'enroulement n) afin de décharger de manière sélective une tension dans l'enroulement de stator et une deuxième diode (5) connectée entre l'anode du deuxième thyristor (4) et le point de raccordement commun (prise d'enroulement n) et en parallèle avec le deuxième condensateur (6) ;
dans lequel l'un des étages de commutation comprend en outre une première bobine de réactance (7) qui présente :
un enroulement primaire (8) dont une première borne est connectée à la cathode de la première diode (2) et à l'anode de la deuxième diode (5), et dont une deuxième borne est connectée au point de raccordement commun (prise d'enroulement n), et
un enroulement secondaire (9) couplé de manière magnétique à l'enroulement primaire (8) ; et
dans lequel la première bobine de réactance (7) comprend un noyau qui sature à une petite fraction du courant d'enroulement de machine nominal de la machine électrique à courant continu.

2. Circuit de commutateur électronique selon la revendication 1, comprenant en outre une deuxième bobine de réactance (7n + 1) qui présente un enroulement primaire (8n + 1) dont une première borne est connectée à la cathode d'une première diode associée à un étage différent des étages de commutation, et à l'anode d'une deuxième diode associée à l'étage différent des étages de commutation, et dont une deuxième borne est connectée au point de raccordement commun (prise d'enroulement n + 1) associé à l'étage différent des étages de commutation, et
un enroulement secondaire (9n + 1) couplé de manière magnétique à l'enroulement primaire (8n + 1) dont une première borne est connectée à :
(i) la jonction entre la cathode de 1a première diode (2) dudit premier étage de commutation et à l'enroulement primaire (8) de la première bobine de réactance (7), et
(ii) la jonction entre l'anode de la deuxième diode (5) dudit premier étage de commutation et à l'enroulement primaire (8) de la première bobine de réactance (7), et
une deuxième borne est connectée à :
(i) l'anode de la première diode (2) par l'intermédiaire d'une première chaîne de diodes ou d'une diode équivalente (10), et à
(ii) la cathode de la deuxième diode (5) par l'intermédiaire d'une deuxième chaîne de diodes ou d'une diode équivalente (11).

3. Circuit de commutateur électronique selon la revendication 2, dans lequel l'étage différent des étages de commutation est adjacent audit premier des étages de commutation associé à la première bobine de réactance (7).

4. Circuit de commutateur électronique selon la revendication 2, dans lequel la deuxième bobine de réactance (7n + 1) associée à l'étage différent des étages de commutation et la première bobine de réactance (7) sont décalées d'un nombre entier d'étages de commutation.

5. Circuit de commutateur électronique selon l'une quelconque des revendications précédentes, comprenant en outre un transformateur d'impulsion (18) dont un enroulement primaire (19) est connecté à une alimentation électrique à découpage (20) et un enroulement secondaire (9n + 1) est couplé de manière magnétique à l'enroulement primaire (19), l'enroulement secondaire (9n + 1) présentant une première borne connectée à la cathode de la première diode (2) et à l'anode de la deuxième diode (5), et une deuxième borne connectée à l'anode de la première diode (2) par l'intermédiaire d'une première chaîne de diodes ou d'une diode équivalente (10) et à la cathode de la deuxième diode (5) par l'intermédiaire d'une deuxième chaîne de diodes ou d'une diode équivalente (11).

6. Circuit de commutateur électronique selon l'une quelconque des revendications précédentes, dans lequel les premier et deuxième condensateurs sont chargés par au moins une alimentation électrique auxiliaire isolée de manière galvanique.

7. Machine rotative à courant continu sans balai comprenant un rotor, un stator, un enroulement de stator qui présente un certain nombre d'enroulements reliés par le même nombre de points de raccordement commun, et un circuit de commutateur électronique selon l'une quelconque des revendications précédentes, dans laquelle chaque étage de commutation du circuit de commutateur électronique est connecté entre l'un respectif des points de raccordement commun et les première et deuxième bornes de courant continu.

8. Machine linéaire à courant continu comprenant un dispositif de translation, un stator, un enroulement de stator qui présente un certain nombre d'enroulements reliés par le même nombre de points de raccordement commun, et un circuit de commutateur électronique selon l'une quelconque des revendications 1 à 6 ou, dans laquelle chaque étage de commutation du circuit de commutateur électronique est connecté entre l'un respectif des points de raccordement commun et les première et deuxième bornes de courant continu.
